# EUROPÄISCHE PATENTSCHRIFT

(11) **EP 2 673 103 B1**
(45) Veröffentlichungstag und Bekanntmachung des Hinweises auf die Patenterteilung: **28.10.2015**
(21) Anmeldenummer: 12717145.2
(22) Anmeldetag: 12.04.2012
(51) Int. Cl.: B23K 9/10, B23K 37/00, B23K 9/32

(54) **SCHWEIßGERÄT**
WELDING DEVICE
POSTE DE SOUDURE

(30) Priorität: 16.05.2011 AT 6902011
(43) Veröffentlichungstag der Anmeldung: 18.12.2013
(73) Patentinhaber: Fronius International GmbH, 4643 Pettenbach (AT)
(72) Erfinder: ITZENBERGER, Daniel, A-4655 Vorchdorf (AT); BRUNMAYR, Wolfgang, A-4600 Wels (AT); OBERROITHER, Wolfgang, A-4713 Meggenhofen (AT); BAUMGARTNER, Sascha, A-4653 Eberstalzell (AT); ORTNER, Roland, A-4643 Pettenbach (AT)
(74) Vertreter: Sonn & Partner Patentanwälte
(86) Internationale Anmeldenummer: PCT/AT2012/000101
(87) Internationale Veröffentlichungsnummer: WO 2012/155160

(56) Entgegenhaltungen:
- US-A- 4 839 499
- US-A- 5 189 277

## Beschreibung

Die Erfindung betrifft ein Schweißgerät, mit einer in einem Gehäuse angeordneten Stromquelle und einer in einem Gehäuse angeordneten Kühleinrichtung zum Kühlen eines Schweißbrenners, wobei zwischen der Stromquelle und der Kühleinrichtung eine elektrische Verbindung vorgesehen ist, wobei die elektrische Verbindung zwischen der Stromquelle und der Kühleinrichtung durch eine Steckverbindung mit zumindest zwei Steckerteilen mit entsprechenden Kontakten gebildet ist, wobei zumindest ein Steckerteil der Steckverbindung mit der Stromquelle und zumindest ein Steckerteil der Steckverbindung mit der Kühleinrichtung verbunden ist, sodass bei Anordnung der Stromquelle an der Kühleinrichtung die Steckerteile der Steckverbindung automatisch verbunden sind.

Schweißgeräte der gegenständlichen Art sind für verschiedene Schweißverfahren wie z.B. MIG/MAG-Schweißverfahren, WIG/TIG-Schweißverfahren, Elektroden-Schweißverfahren, Doppeldraht-Tandem-Schweißverfahren, Plasma- oder Lötverfahren usw. ausgelegt. Üblicherweise ist eine Kühleinrichtung zum Kühlen des Schweißbrenners vorgesehen, die im Falle einer Flüssigkeitskühlung einen Behälter für die Kühlflüssigkeit aufweist, welche zu den zu kühlenden Komponenten geführt wird. Zur Versorgung der Komponenten der Kühleinrichtung mit elektrischer Energie und zur Steuerung der Kühleinrichtung ist eine entsprechende elektrische Verbindung zwischen der Stromquelle des Schweißgeräts und der Kühleinrichtung erforderlich. Üblicherweise wird diese elektrische Verbindung durch entsprechende Kabel realisiert, welche von entsprechend geschultem Fachpersonal mit den entsprechenden Komponenten in der Stromquelle und der Kühleinrichtung verbunden werden. Zu diesem Zweck ist es erforderlich die Gehäuse der Stromquelle und der Kühleinrichtung zu öffnen und die notwendigen Verbindungen herzustellen. Dies stellt einen erhöhten Arbeitsaufwand und auch ein Sicherheitsrisiko für das Personal dar. Vor einer entsprechenden Manipulation an der Stromquelle des Schweißgeräts ist daher üblicherweise eine Abschaltung der Spannungsversorgung aus Sicherheitsgründen vorgeschrieben.

Im Falle einer Umrüstung der Kühleinrichtung, beispielsweise von Wasserkühlung auf Gaskühlung oder im Falle der Verwendung des Schweißgeräts ohne Kühlung, ist ein Wechsel oder eine Demontage der Kühleinrichtung und somit der entsprechenden elektrischen Verbindung notwendig. Bei Schweißgeräten des Standes der Technik stellt dies einen relativ zeitaufwändigen Prozess dar, der üblicherweise nur von entsprechend geschultem Person durchgeführt werden kann.

Die US 5,189,277 A beschreibt ein Schweißgerät mit einem Leistungsteil, welches durch Übereinanderstapeln erweitert werden kann. Über Steckverbindungen an der Unterseite und Oberseite der Module wird eine elektrische Verbindung zwischen den Modulen gewährleistet.

Die US 4,839,499 A beschreibt ein System zur Versorgung verschiedener Schneidbrenner mit elektrischer Energie, wobei Kontakte deaktiviert werden, wenn sich das Gerät in einem Zustand befindet, in dem diese Kontakte nicht gesichert sind.

Die Aufgabe der vorliegenden Erfindung besteht daher in der Schaffung eines Schweißgeräts, welches den oben genannten Nachteil vermeidet und eine Verbindung der Stromquelle mit der Kühleinrichtung oder Demontage der Stromquelle von der Kühleinrichtung vereinfacht und auch eine Durchführung durch nicht speziell geschultes Personal ohne Risiko zulässt.

Gelöst wird die erfindungsgemäße Aufgabe durch ein oben genanntes Schweißgerät bei'dem zumindest stromführende Kontakte des zumindest einen mit der Stromquelle verbundenen Steckerteils bei Trennung der zumindest zwei Steckerteile der Steckverbindung deaktiviert sind, in dem zumindest die stromführenden Kontakte des zumindest einen mit der Stromquelle verbundenen Steckerteils mit jeweils zwei übereinander angeordneten und in Serie geschalteten Schaltern verbunden sind, und ein Schalter der in Serie geschalteten Schalter durch zumindest ein am zumindest einen an der Oberseite des Gehäuses der Kühleinrichtung angeordneten Steckerteil angeordnetes Betätigungselement bei Verbindung der Steckerteile der Steckverbindung betätigbar ist, welche Betätigung des einen Schalters an den darüber angeordneten Schalter weiterleitbar ist. Durch die Steckverbindung werden somit die entsprechenden Komponenten der Stromquelle und Kühleinrichtung automatisch miteinander verbunden, ohne dass die Gehäuse der Stromquelle und der Kühleinrichtung geöffnet und die Leitungen angeschlossen werden müssen. Dadurch kann die Herstellung oder Trennung der Verbindung beschleunigt und auch durch nicht speziell geschultes Fachpersonal vorgenommen werden. Unter der Voraussetzung einer entsprechenden Gestaltung der Steckerteile der Steckverbindung ist auch keine Abschaltung der Stromquelle oder Trennung der Stromquelle von der Spannungsversorgung vor der Herstellung oder Trennung der elektrischen Verbindung zwingend erforderlich ohne dass es für die Benutzer des Schweißgeräts zu Sicherheitseinbußen kommt. Durch die Deaktivierung zumindest stromführender Kontakte des Steckerteils der Steckverbindung wird sichergestellt, dass auch bei nicht abgeschalteter oder von der Spannungsversorgung getrennter Stromquelle und Trennung der Stromquelle von der Kühleinrichtung keine Gefährdung für den Benutzer stattfinden kann. Dadurch wird auch verhindert, dass beispielsweise beim Abstellen der Stromquelle mit an der Unterseite angeordnetem Steckerteil auf einem elektrisch leitenden Grund, beispielsweise einem feuchten Boden, ein Kurzschluss auftreten kann. Durch eine derartige Konstruktion wird sichergestellt, dass bei Trennung der Stromquelle oder des Zwischenmoduls von der Kühleinrichtung allenfalls stromführende Kontakte des mit der Stromquelle verbundenen Steckerteils sicher deaktiviert werden. Das Betätigungselement kann beispielsweise durch einen Zapfen oder dgl. gebildet sein, der in eine entsprechende Aufnahmeöffnung am Steckerteil, der mit der Stromquelle verbunden ist, einführbar ist, sodass der entsprechende Schalter geschlossen bzw. geöffnet werden kann. Die Sicherheit kann dadurch erhöht werden, dass jeder stromführende Kontakt mit zwei oder mehr in Serie geschalteten Schaltern verbunden wird. Dadurch kann mit hoher Wahrscheinlichkeit sichergestellt werden, dass der stromführende Kontakt beim Abheben der Stromquelle von der Kühleinrichtung stromlos ist, auch wenn beispielsweise ein Schalter aufgrund eines mechanischen Problems oder zusammengeschmolzener Kontakte geschlossen bleibt.

Vorteilhafterweise ist der zumindest eine mit der Stromquelle verbundene Steckerteil an der Unterseite des Gehäuses der Stromquelle und der zumindest eine mit der Kühleinrichtung verbundene Steckerteil der Steckverbindung an der Oberseite des Gehäuses der Kühleinrichtung angeordnet, sodass bei Anordnung der Stromquelle auf der Kühleinrichtung die Steckerteile der Steckverbindung automatisch verbunden sind. Dies stellt eine bevorzugte Ausführungsform dar, durch welche es bei der üblichen Anordnung der Stromquelle auf der Kühleinrichtung bzw. dem Kühlmodul automatisch zur Herstellung der notwendigen elektrischen Verbindung kommt.

Alternativ dazu kann der mit der Stromquelle verbundene Steckerteil auch an der Unterseite eines zwischen der Stromquelle und der Kühleinrichtung anordenbaren Zwischenmoduls und der zumindest eine mit der Kühleinrichtung verbundene Steckerteil der Steckverbindung an der Oberseite des Gehäuses der Kühleinrichtung angeordnet sein, sodass bei Anordnung des Zwischenmoduls auf der Kühleinrichtung die Steckerteile der Steckverbindung automatisch verbunden sind. Diese Ausführungsvariante, bei welcher ein Zwischenmodul zwischen der Stromquelle und der Kühleinrichtung vorgesehen ist, eignet sich insbesondere für die nachträgliche Umrüstung vorhandener Stromquellen, indem die Stromquelle mit dem Zwischenmodul verbunden wird und eine elektrische Verbindung zwischen der Stromquelle und dem an der Unterseite des Zwischenmoduls angeordnet Steckerteil der Steckverbindung hergestellt wird. Selbstverständlich kann zwischen der Stromquelle und dem Zwischenmodul ebenfalls eine Steckverbindung angeordnet werden in der selben Art, wie es zwischen der Stromquelle und der Kühleinrichtung ohne Anordnung eines Zwischenmoduls der Falls ist.

Um eine sichere Verbindung der Steckerteile der Steckverbindung ohne Beschädigung der Kontakte zu gewährleisten, kann zumindest eine Vorrichtung zur Zentrierung der Steckerteile vorgesehen sein. Die entsprechend gestaltete Zentriervorrichtung gewährleistet somit ein ordnungsgemäßes Verbinden der Steckerteile der Steckverbindung.

Die Zentriervorrichtung kann durch ein um den zumindest einen Steckerteil angeordnetes Rahmenelement mit schrägen Innenflächen und ein um den zumindest einen weiteren Steckerteil angeordnetes weiteres Rahmenelement mit zu den schrägen Innenflächen korrespondierend ausgebildeten schrägen Außenflächen gebildet sein. Abgesehen von der Zentrierwirkung bilden derartige Rahmenelemente auch einen Schutz für den jeweiligen Steckerteil. Wenn das Rahmenelement den Steckerteil überragt, wird somit bei einem Absetzen beispielsweise der Stromquelle sichergestellt, dass der Steckerteil nicht auf dem Untergrund aufliegt und verschmutzt oder beschädigt wird. Der Form und Gestaltung der Zentriervorrichtung bzw. Rahmenelemente ist keine Grenze gesetzt.

Wenn die Rahmenelemente von den durch sie umgebenden Steckerteilen getrennt angeordnet sind, kann eine sogenannte schwimmende Lagerung des Steckers im jeweiligen Gehäuse der Komponente des Schweißgeräts realisiert werden. Dabei ist der Steckerteil gegenüber dem Rahmenelement in bestimmten Grenzen verschieblich gelagert, wodurch Toleranzen ausgeglichen werden können.

Alternativ dazu kann das Rahmenelement auch mit dem jeweiligen durch ihn umgebenden Steckerteil einstückig hergestellt sein, wodurch eine Verschiebung des Steckerteils im Bezug auf dar Rahmenelement nicht möglich ist, sofern der Steckerteil fest im jeweiligen Gehäuse moniert ist. Allerdings kann auch in diesem Fall eine schwimmende Lagerung des Steckerteils im jeweiligen Gehäuse der Komponente des Schweißgeräts dadurch erzielt werden, dass der Steckerteil zusammen mit dem Rahmenelement verschieblich mit dem Gehäuse verbunden wird.

Um eine Verschmutzung, zumindest des mit der Stromquelle verbundenen zumindest einen Steckerteils zu verhindern und auch Berührung der elektrischen Kontakte zu vermeiden, kann ein entsprechender Deckel angeordnet sein. Dabei ist es von Vorteil, wenn der Deckel in der geöffneten Stellung arretierbar ist, so dass der Deckel beim Anordnen der Stromquelle auf der Kühleinrichtung nicht hinderlich ist.

Von Vorteil ist es, wenn ein solcher Deckel vorzugsweise automatisch bei Verbindung der Steckerteile der Steckverbindung vom jeweiligen Steckerteil wegbewegbar ist.

Um Fehlkontaktierungen der Steckerteile der Stromquelle bzw. des Zwischenmoduls und der Kühleinrichtung zu vermeiden, ist es von Vorteil, wenn die Steckerteile außermittig an der Unterseite des Gehäuses der Stromquelle oder der Unterseite des Zwischenmodul und der Oberseite des Gehäuses der Kühleinrichtung angeordnet sind. Durch die außermittige Anordnung der Steckerteile wird bei bündiger Anordnung der Komponenten des Schweißgeräts übereinander nur die gewünschte Verbindung der Steckerteile ermöglicht.

Um eine optimale Verbindung der Komponenten des Schweißgeräts zu ermöglichen, können an der Unterseite des Gehäuses der Stromquelle und bzw. oder an der Unterseite des Zwischenmoduls Verbindungselemente und an der Oberseite des Gehäuses der Kühleinrichtung und allenfalls an der Oberseite des Zwischenmodul entsprechende Aufnahmeelemente zur Aufnahme der Verbindungselemente vorgesehen sein. Beispielsweise können an der Unterseite der Stromquelle vorzugsweise an den Ecken Füße angeordnet sein, welche in entsprechende Löcher an der Oberseite des Gehäuses der Kühleinrichtung passen. Dadurch wird auch die Verbindung der Steckerteile unterstützt und ein nachträgliches seitliches Verschieben der Stromquelle gegenüber der Kühleinrichtung verhindert.

Weiters können Verriegelungselemente zur Verriegelung der Verbindung der Stromquelle mit der Kühleinrichtung und allenfalls dem Zwischenmodul vorgesehen sein. Derartige Verriegelungselemente können beispielsweise durch Verbindungsbolzen, Schrauben oder dgl. gebildet werden.

Der zumindest eine mit der Stromquelle verbundene Steckerteil der Steckverbindung ist vorzugsweise durch eine Buchse mit zurückversetzten Kontakten und der zumindest eine mit der Kühleinrichtung verbundene Steckerteil durch einen zur Buchse passenden Stecker gebildet. Durch die Ausbildung des mit der Stromquelle verbundenen Steckerteils als Buchse wird eine Berührung stromführender Kontakte wirkungsvoll verhindert.

Die vorliegende Erfindung wird anhand der beigefügten Zeichnungen näher erläutert.

Darin zeigen:
Fig. 1 eine schematische Darstellung eines Schweißgeräts;
Fig. 2 eine teilweise geschnittene Seitenansicht auf eine auf einer Kühleinrichtung angeordnete Stromquelle mit der erfindungsgemäßen Verbindung;
Fig. 3 eine teilweise geschnittene Seitenansicht auf eine auf einer Kühleinrichtung angeordneten Stromquelle mit einem dazwischen angeordneten Zwischenmodul;
Fig. 4 eine perspektivische Ansicht einer Ausführungsform eines an der Unterseite des Gehäuses der Stromquelle anzuordnenden Steckerteils der erfindungsgemäßen Steckverbindung;
Fig. 5 ein Schnittbild durch den Steckerteil gemäß Fig. 4;
Fig. 6 eine perspektivische Ansicht einer eine Steckverbindung mit einem an der Unterseite des Gehäuses der Stromquelle oder des Zwischenmoduls anzuordnenden Steckerteils gemäß Fig. 4 und 5 und einem zugehörigen an der Oberseite des Gehäuses der Kühleinrichtung anzuordnenden Steckerteil;
Fig. 7 ein Schnittbild durch die Steckverbindung gemäß Fig. 6;
Fig. 8 eine perspektivische Ansicht einer weitere Ausführungsform eines mit der Kühleinrichtung zu verbindenden Steckerteils der Steckverbindung;
Fig. 9 ein Schnittbild durch eine Steckverbindung mit einem Steckerteil gemäß Fig. 8 und dem zugehörigen Steckerteil, der an der Unterseite der Stromquelle bzw. einem Zwischenmodul anzuordnen ist;
Fig. 10 eine weitere Ausführungsform eines mit der Stromquelle bzw. einem Zwischenmodul zu verbindenden Steckerteil; und
Fig. 11 eine perspektivische Ansicht des zum Steckerteil gemäß Fig. 10 zugehörigen Steckerteils, der mit der Kühleinrichtung zu verbinden ist.

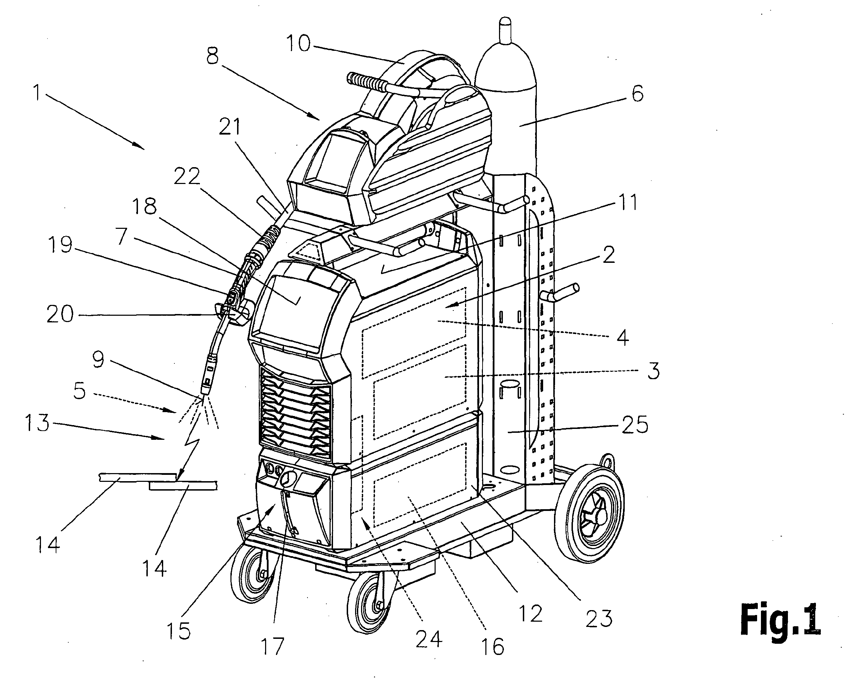

Fig. 1 zeigt ein Schweißgerät 1 für verschiedenste Prozesse bzw. Verfahren, wie z.B. MIG/MAG-Schweißen bzw. WIG/TIG-Schweißen oder Elektroden-Schweißverfahren, Doppeldraht/Tandem-Schweißverfahren, Plasma- oder Lötverfahren usw.. Das Schweißgerät 1 umfasst eine Stromquelle 2 mit einem darin angeordneten Leistungsteil 3, einer Steuervorrichtung 4 und weiteren nicht dargestellten Komponenten und Leitungen, wie beispielsweise einem Umschaltglied, Steuerventilen, usw.. Die Stromquelle 2 und deren Komponenten sind in einem entsprechenden Gehäuse 11 angeordnet. Die Steuervorrichtung 4 ist beispielsweise mit einem Steuerventil verbunden, welches in einer Versorgungsleitung für ein Schutzgas, wie beispielsweise CO₂, Helium oder Argon und dergl., zwischen einem Gasspeicher 6 und einem Schweißbrenner 7 angeordnet ist. Zudem kann über die Steuervorrichtung 4 noch ein Drahtvorschubgerät 8, welches für das MIG/MAG-Schweißen üblich ist, angesteuert werden, wobei über eine Versorgungsleitung ein Zusatzwerkstoff bzw. ein Schweißdraht 9 von einer Vorratstrommel 10 bzw. einer Drahtrolle in den Bereich des Schweißbrenners 7 zugeführt wird. Selbstverständlich kann das Drahtvorschubgerät 8, im Schweißgerät 1, insbesondere im Gehäuse 11 der Stromquelle 2, integriert und nicht, wie in Fig. 1 dargestellt, als Zusatzgerät auf einem Fahrwagen 12 positioniert sein. Weiters kann das Drahtvorschubgerät 8 auch direkt auf das Schweißgerät 2 aufgesetzt werden, indem das Gehäuse 11 der Stromquelle 2 an der Oberseite zur Aufnahme des Drahtvorschubgeräts 8 ausgebildet ist. In diesem Fall kann der Fahrwagen 12 auch entfallen.

Das Drahtvorschubgerät 8 kann den Schweißdraht 9 auch außerhalb des Schweißbrenners 7 an die Prozessstelle zuführen, wobei im Schweißbrenner 7 bevorzugt eine nicht abschmelzende Elektrode angeordnet ist, wie dies beim WIG/TIG-Schweißen üblich ist.

Der Strom zum Aufbauen eines Lichtbogens 13 zwischen der Elektrode bzw. dem Schweißdraht 9 und einem Werkstück 14 wird über eine Schweißleitung (nicht dargestellt) vom Leistungsteil 3 der Stromquelle 2, dem Schweißbrenner 7, insbesondere der Elektrode bzw. dem Schweißdraht 9, zugeführt. Das zu verschweißende Werkstück 14 ist über eine weitere Schweißleitung für das weitere Potential, insbesondere das Masse-Kabel, mit der Stromquelle 2 verbunden, sodass über den Lichtbogen 13 ein Stromkreis aufgebaut werden kann.

Zum Kühlen des Schweißbrenners 7 kann dieser über eine Kühleinrichtung 15 unter Zwischenschaltung allfälliger Komponenten, wie beispielsweise einem Strömungswächter, mit einem Flüssigkeitsbehälter, insbesondere einem Wasserbehälter 16 mit einer Füllstandsanzeige 17, verbunden werden. Die Kühleinrichtung 15 und deren Komponenten sind in einem entsprechenden Gehäuse 23 angeordnet. Die einzelnen Komponenten der Schweißanlage, also die Stromquelle 2, das Drahtvorschubgerät 8 und die Kühleinrichtung 15, sind dabei derart ausgebildet, dass sie sicher übereinander gestapelt bzw. aufeinander gestellt werden können.

Das Schweißgerät 1, insbesondere die Stromquelle 2, weist weiters eine Ein- und/oder Ausgabevorrichtung 18 auf, über die die unterschiedlichsten Schweißparameter, Betriebsarten oder Schweißprogramme des Schweißgerätes 1 eingestellt bzw. aufgerufen und angezeigt werden können. Dabei werden die über die Ein- und/oder Ausgabevorrichtung 18 eingestellten Schweißparameter, Betriebsarten oder Schweißprogramme an die Steuervorrichtung 4 weitergeleitet und von dieser werden anschließend die einzelnen Komponenten des Schweißgerätes 1 angesteuert bzw. entsprechende Sollwerte für die Regelung oder Steuerung vorgegeben. Bei Verwendung eines entsprechenden Schweißbrenners 7 mit einer Schweißbrenner-Ein- und/oder Ausgabevorrichtung 19 können Einstellvorgänge auch über den Schweißbrenner 7 vorgenommen werden können. Bevorzugt ist dabei der Schweißbrenner 7 über einen Datenbus, insbesondere einen seriellen Datenbus, mit dem Schweißgerät 1, insbesondere der Stromquelle 2 oder dem Drahtvorschubgerät 8 verbunden. Zum Starten des Schweißprozesses weist der Schweißbrenner 7 meist einen Startschalter (nicht dargestellt) auf, sodass durch Betätigen des Startschalters der Lichtbogen 13 gezündet werden kann. Um gegen die große Hitzeeinstrahlung vom Lichtbogen 13 geschützt zu werden, ist es möglich, dass der Schweißbrenner 7 mit einem Hitzeschutzschild 20 ausgestattet wird.

Weiters ist in dem dargestellten Ausführungsbeispiel der Schweißbrenner 7 über ein Schlauchpaket 21 mit dem Schweißgerät 1 verbunden, wobei das Schlauchpaket 21 über einem Knickschutz 22 am Schweißbrenner 7 befestigt ist. In dem Schlauchpaket 21 sind die einzelnen Leitungen, wie beispielsweise die Versorgungsleitung bzw. Leitungen für den Schweißdraht 9, für das Gas 5, für den Kühlkreislauf, für die Datenübertragung, usw., vom

Schweißgerät 1 zum Schweißbrenner 7 angeordnet, wogegen das Masse-Kabel bevorzugt extra an der Stromquelle 2 angeschlossen wird.

Grundsätzlich ist zu erwähnen, dass für die unterschiedlichen Schweißverfahren bzw. Schweißgeräte 1, wie beispielsweise WIG-Geräte oder MIG/MAG-Geräte oder Plasmageräte, nicht alle zuvor benannten Komponenten verwendet bzw. eingesetzt werden müssen. Hierzu ist es beispielsweise möglich, dass der Schweißbrenner 7 als luftgekühlter Schweißbrenner 7 ausgeführt werden kann, sodass beispielsweise das Kühleinrichtung 15 entfallen kann. Man kann also sagen, dass das Schweißgerät 1 zumindest durch die Stromquelle 2, das Drahtvorschubgerät 8 und das Kühleinrichtung 15 gebildet wird, wobei diese auch in einem gemeinsamen Gehäuse 11 angeordnet sein kann.

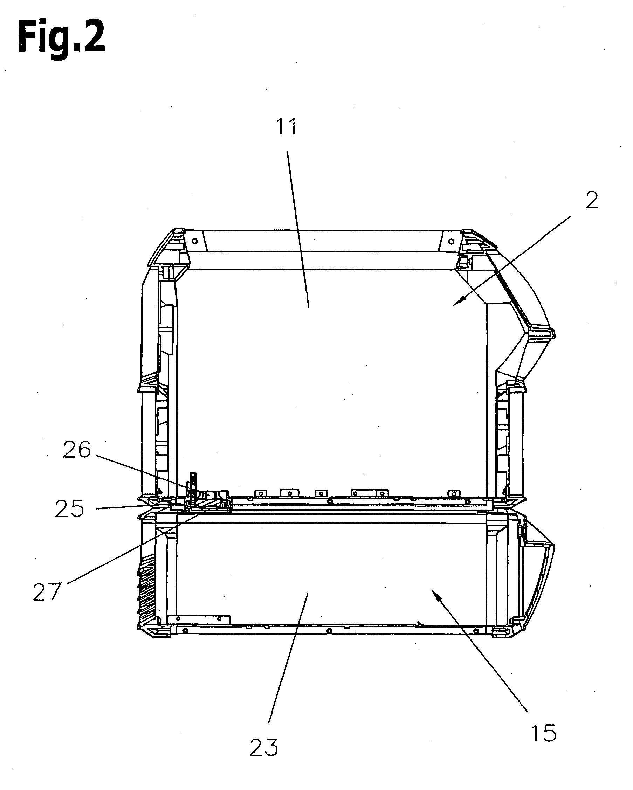

Fig. 2 zeigt eine schematische, teilweise geschnittene bzw. geöffnete Seitenansicht einer Stromquelle 2, welche auf einer zugehörigen Kühleinrichtung 15 angeordnet ist. Erfindungsgemäß ist der mit der Stromquelle 2 verbundene Steckerteil 26 der Steckverbindung 25 an der Unterseite des Gehäuses 11 der Stromquelle 2 angeordnet und der zugehörige mit der Kühleinrichtung 15 verbundene Steckerteil 27 an der Oberseite des Gehäuses 23 der Kühleinrichtung 15 platziert. Beim gebrauchsgemäßen Anordnen der Stromquelle 2 über der Kühleinrichtung 15 werden die Steckerteile 26, 27 der Steckverbindung 25 automatisch kontaktiert und somit die erforderliche elektrische Verbindung zwischen der Stromquelle 2 und der Kühleinrichtung 15 hergestellt. Die Kontakte der Steckerteile 26, 27 können verschiedenartig ausgebildet sein und elektrische Energie zum Betreiben einer Pumpe in der Kühleinrichtung 15 und auch Steuersignale von der Stromquelle 2 zur Kühleinrichtung 15 oder Sensorsignale von der Kühleinrichtung 15 zur Stromquelle 2 übertragen. Die Kontakte können auch durch optische Sende- und Empfangseinrichtungen für das Übertragen und Empfang optischer Signale ausgebildet sein.

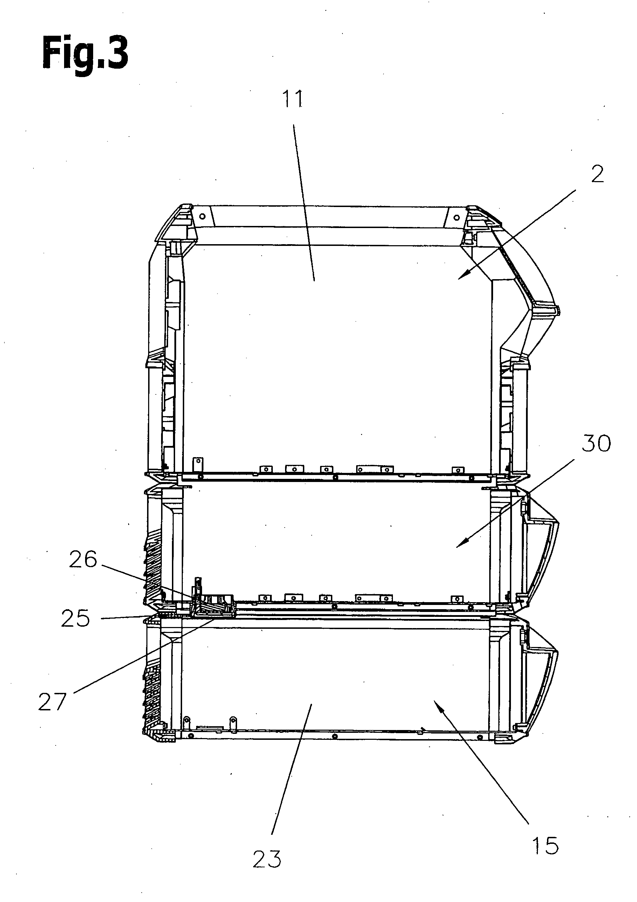

Fig. 3 zeigt eine gegenüber Fig. 2 erweiterte Ausführungsform, wobei ein Zwischenmodul 30 zwischen der Stromquelle 2 und der Kühleinrichtung 15 angeordnet ist. In diesem Fall ist der mit der Stromquelle 2 verbundene Steckerteil 26 der Steckverbindung 25 an der Unterseite des Zwischenmoduls 30 angeordnet. Der Steckerteil 26 kann über herkömmliche intern im Zwischenmodul 30 und der Stromquelle 2 verlaufende Leitungen mit den entsprechenden Komponenten der Stromquelle 2 verbunden werden. Der zum Steckerteil 26 zugehörige Steckerteil 27, welcher mit der Kühleinrichtung 15 verbunden ist, ist wiederum an der Oberseite des Gehäuses 23 der Kühleinrichtung 15 angeordnet, sodass bei Platzierung des Zwischenmoduls 30 über der Kühleinrichtung 15 automatisch eine Kontaktierung der Steckerteil 26, 27 der Steckverbindung 25 stattfindet.

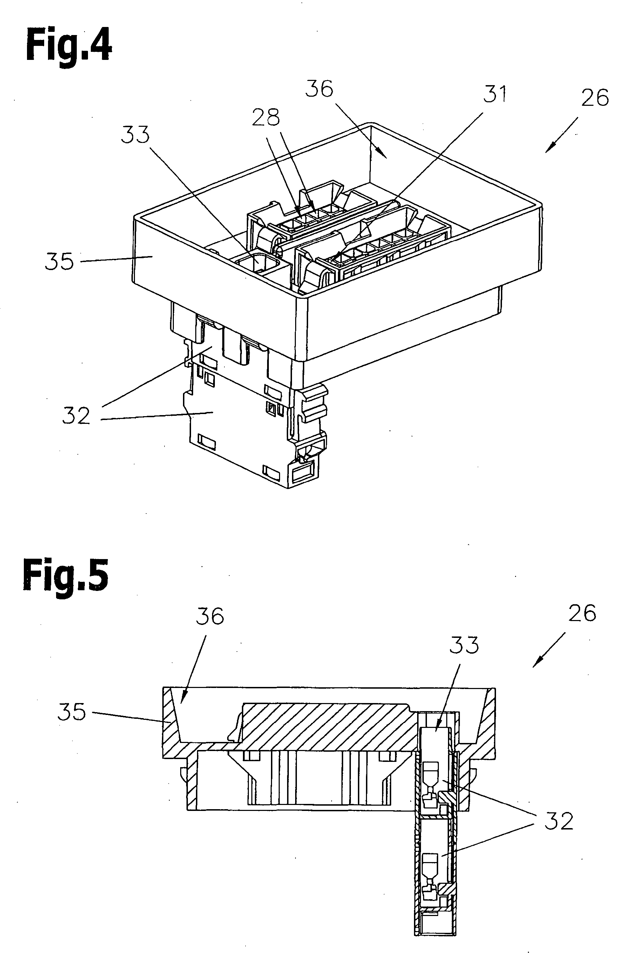

Fig. 4 und Fig. 5 zeigen eine perspektivische Ansicht und ein Schnittbild einer Ausführungsform eines Steckerteils 26, welcher mit der Stromquelle 2 verbunden wird. Der Steckerteil 26 enthält die entsprechenden Kontakte 28, welche über herkömmliche Leitungen mit den entsprechenden Komponenten der Stromquelle 2 verbunden werden. Um eine Berührung stromführender Teile des Steckerteils 26 zu verhindern, können zumindest stromführende Kontakte 31 des Steckerteils 26 mit entsprechenden Schaltern 32 verbunden sein, wodurch bei Trennung der Steckerteile 26, 27 der Steckverbindung 25 automatisch die stromführenden Kontakte 31 deaktiviert werden. Die Schalter 32 werden über entsprechende Betätigungselemente 34 am gegenüberliegenden Steckerteil 27 betätigt, welche in eine dafür vorgesehene Aufnahmeöffnung 33 ragen und bei verbundenen Steckerteilen 26, 27 die Kontakte der Schalter 32 schließen. Dadurch wird gewährleistet, dass bei einer Trennung der Steckerteile 26, 27 automatisch die stromführenden Kontakte 31 des mit der Stromquelle 2 verbundenen Steckerteils 26 deaktiviert werden.

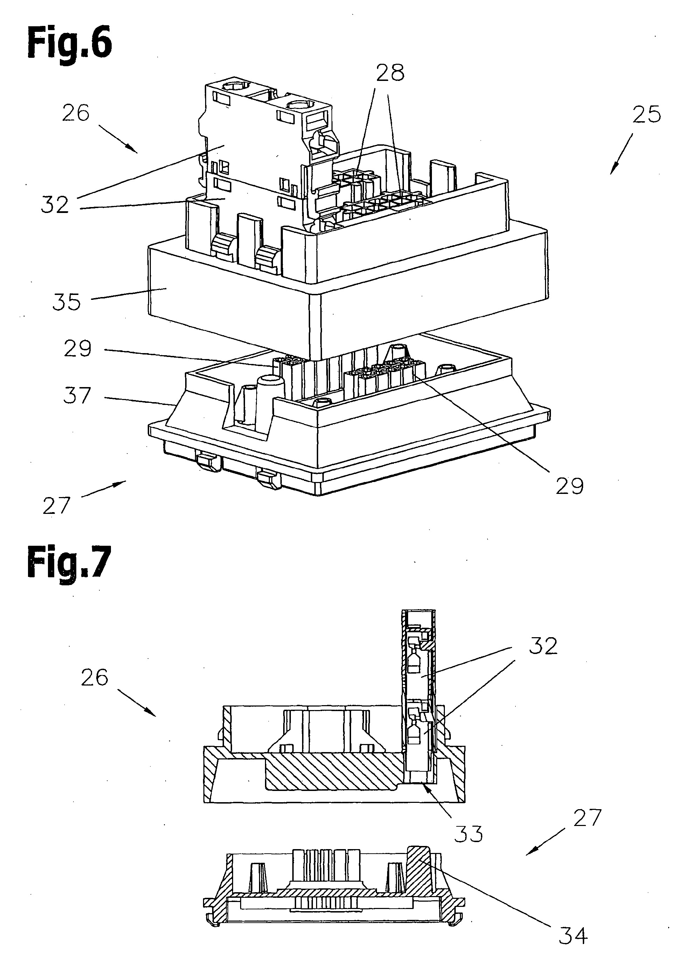

Zur Zentrierung der Steckerteile 26, 27 kann eine entsprechende Zentriervorrichtung vorgesehen sein. Bei der dargestellten Ausführungsform des Steckerteils 26 gemäß den Figuren 4 und 5 ist diese Zentriervorrichtung durch ein um den Steckerteil 26 angeordnetes Rahmenelement 35 gebildet, welches schräg verlaufende Innenflächen 36 aufweist. In dieses Rahmenelement 35 passt das entsprechende Gegenstück des mit der Kühleinrichtung 15 verbundenen Steckerteils 27, wie anhand der Figuren 6 und 7 erläutert werden wird. Zusätzlich zur Zentrierwirkung hat das Rahmenelement 35 auch eine Schutzwirkung, da es die Kontakte 28 des Steckerteils 26 vorzugsweise überragt. Wird die Stromquelle 2 von der Kühleinrichtung 15 abgehoben und beispielsweise am Boden abgestellt, gewährleistet somit das Rahmenelement 35 einen Schutz der Kontakte 28, 31 des Steckerteils 26 vor Beschädigung und Verschmutzung.

Fig. 6 und Fig. 7 zeigen eine perspektivische Ansicht und ein Schnittbild einer Steckverbindung 25 mit einem mit der Stromquelle 2 zu verbindenden Steckerteil 26 gemäß den Fig. 4 und 5 und einem dazu passenden Steckerteil 27, der mit der Kühleinrichtung 15 verbunden wird. Der Steckerteil 27 umfasst auch das erwähnte Betätigungselement 34, des in Form eines Zapfens ausgebildet sein kann und in die Ausnehmung 33 der Schalter 32 am Steckerteil 26 ragt und die Schalter 32 entsprechend betätigt. Zur Zentrierung der Steckerteile 26, 27 der Steckverbindung 25 ist ein zum Rahmenelement 35 mit den schräg verlaufenden Innenflächen 36 des Steckerteils 26 komplementär gestaltetes Rahmenelement 37 am Steckerteil 27 angeordnet, das mit entsprechend schräg verlaufenden Außenflächen 38 ausgestattet ist. Durch diese Zentriervorrichtung wird das Zusammenstecken der Steckerteil 26, 27 der Steckverbindung 25 erleichtert. Natürlich können die Rahmenelemente 35, 37 bzw. generell die Zentriervorrichtungen auch anders ausgestaltet sein. Bei der Ausführungsvariante der Steckverbindung 25 gemäß den Fig. 4 bis 7 sind jeweils zwei Schalter 32 übereinander am Steckerteil 26 angeordnet, wobei der eine Schalter 32 durch das am gegenüberliegenden Steckerteil 27 angeordnete Betätigungselement 34 betätigt wird und über einen internen Mechanismus die Bestätigung an den darüber angeordnet Schalter 32 weitergeleitet wird.

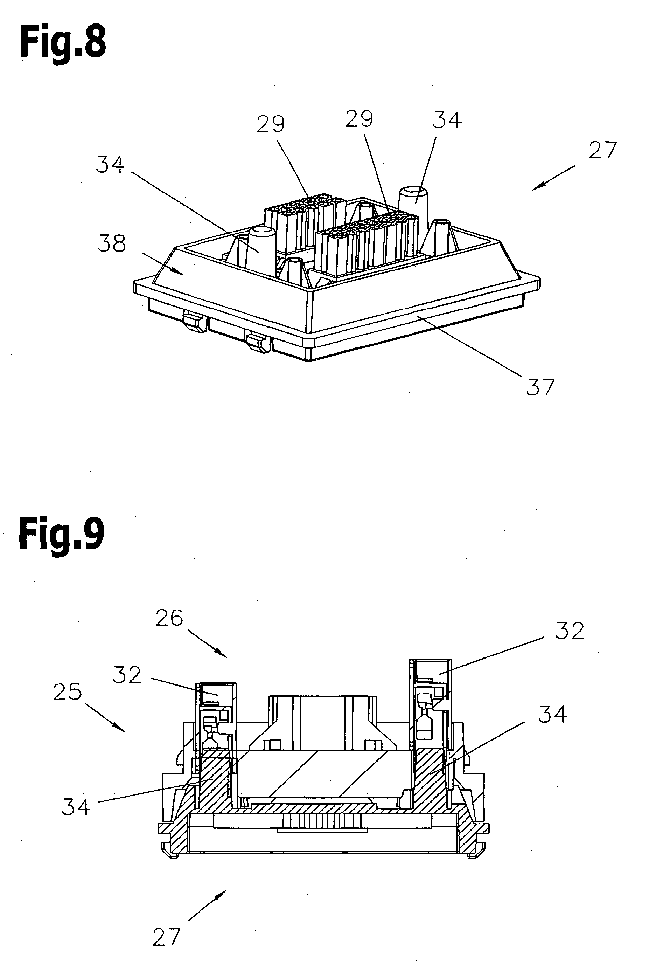

Die Fig. 8 und 9 zeigen eine weitere Ausführungsform einer Steckverbindung 25. Fig. 8 zeigt eine perspektivische Ansicht des mit der Kühleinrichtung 15 zu verbindenden Steckerteils 27, wobei gegenüber der in den Fig. 4 bis 7 dargestellten Ausführungsvariante zwei Betätigungselement 34 angeordnet sind. Wie in der Schnittbilddarstellung der Steckverbindung 25 gemäß Fig. 9 erkennbar ist, werden durch die Betätigungselemente 34 am Steckerteil 27 entsprechende am Steckerteil 26 angeordnete Schalter 32 betätigt. Dadurch wird bei der Trennung der Steckverbindung 25 gewährleistet, dass zumindest die stromführenden Kontakte 31 am Steckerteil 26 von den stromführenden Komponenten der Stromquelle 2 getrennt werden.

Die Steckerteile 26, 27 können auch schwimmend mit dem Gehäuse 11 der Stromquelle 2 bzw. Gehäuse 23 der Kühleinrichtung 15 verbunden werden, wobei gewisse seitliche Verschiebungen zugelassen werden. Dadurch können Toleranzen ausgeglichen und Beschädigungen der Steckerteile 26, 27 der Steckverbindung 25 verhindert werden.

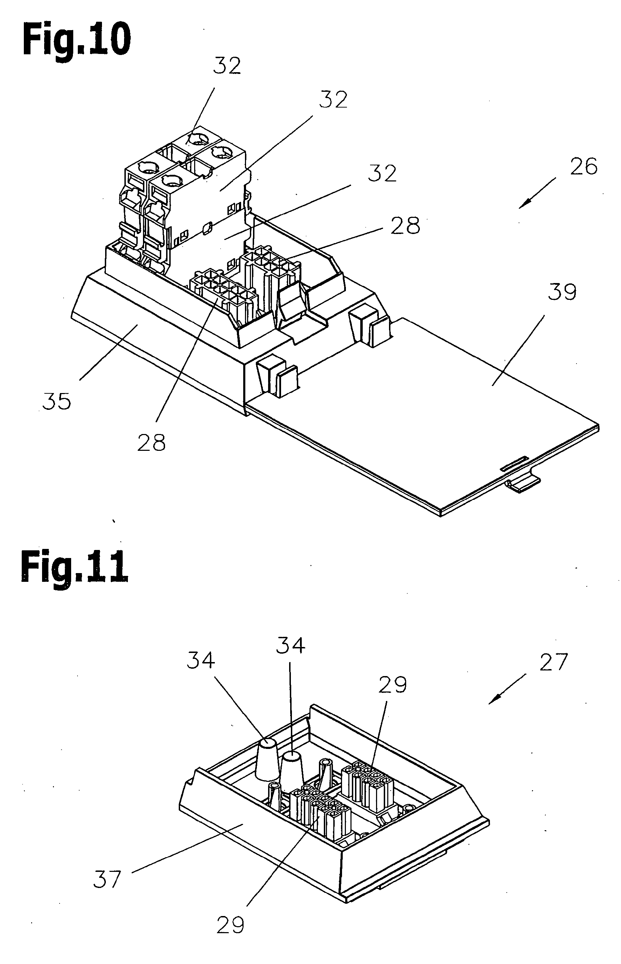

Schließlich zeigen die Fig. 10 und 11 eine weitere Ausführungsform der Steckerteile 26 und 27 in perspektivischer Ansicht. Beim Steckerteil 26 gemäß Fig. 10, der mit der Stromquelle 2 verbunden wird, ist ein Deckel 39 vorgesehen, durch welchen der Steckerteil 26 abgedeckt und geschützt werden kann, wenn die Stromquelle 2 von der Kühleinrichtung 15 getrennt ist. Es ist von Vorteil, wenn der Deckel 39 in der offenen Position arretierbar ist, so dass der Deckel 39 beim Zusammenstecken der Stromquelle 2 und der Kühleinrichtung 15 nicht hinderlich ist. Der Steckerteil 26 gemäß Fig. 10 unterscheidet sich von den zuvor beschriebenen Ausführungsformen auch dadurch, dass zwei Schalter 32 auf einer Seite des Steckerteils 26 angeordnet sind. Wenn die beiden Schalter 32 in Serie mit den stromführenden Kontakten 31 des Steckerteils 26 verbunden werden, kann auch dann eine Trennung der stromführenden Kontakte 31 des Steckerteils 26 von der Stromversorgung erzielt werden, wenn beispielsweise ein Schalter 32 blockiert oder dessen Kontakte verschmolzen sind. Somit kann durch die Serienschaltung zumindest zweier Schalter 32 die Sicherheit noch weiter erhöht werden.

Fig. 11 zeigt den zum Steckerteil 26 gemäß Fig. 10 zugehörigen Steckerteil 27 der mit der Kühleinrichtung 15 verbunden wird. Entsprechend der Anordnung der Schalter 32 am Steckerteil 26 gemäß Fig. 10 sind zwei Betätigungselemente 34 zur Betätigung der Schalter 32 am Steckerteil 27 angeordnet.

Die vorliegende Erfindung ermöglicht das einfache Andocken der Kühleinrichtung 15 an der Stromquelle 2 eines Schweißgeräts 1, ohne dass aufwändige und gefährliche Verbindungsarbeiten durch entsprechendes Fachpersonal vorgenommen werden müssen. Entsprechende Maßnahmen und Konstruktionen der Steckerteile 26, 27 vorausgesetzt, wird auch eine Berührung spannungsführender Teile an der von der Kühleinrichtung 15 getrennten Stromquelle 2 verhindert. Ebenfalls kann durch entsprechende mechanische und/oder elektrische Vorkehrungen verhindert werden, dass der mit der Stromquelle 2 verbundene Steckerteil 26 der Steckverbindung 25 mit leitenden Oberflächen in Verbindung kommt und dadurch Kurzschlüsse und Beschädigungen an der Stromquelle 2 auftreten.

## Patentansprüche

1. Schweißgerät (1), mit einer in einem Gehäuse (11) angeordneten Stromquelle (2) und einer in einem Gehäuse (23) angeordneten Kühleinrichtung (15) zum Kühlen eines Schweißbrenners (7), wobei zwischen der Stromquelle (2) und der Kühleinrichtung (15) eine elektrische Verbindung (24) vorgesehen ist, und die elektrische Verbindung (24) zwischen der Stromquelle (2) und der Kühlenrichtung (15) durch eine Steckverbindung (25) mit zumindest zwei Steckerteilen (26, 27) mit entsprechenden Kontakten (28, 29) gebildet ist, wobei zumindest ein Steckerteil (26) der Steckverbindung (25) mit der Stromquelle (2) und zumindest ein Steckerteil (27) der Steckverbindung (25) mit der Kühleinrichtung (15) verbunden ist, sodass bei Anordnung der Stromquelle (2) an der Kühleinrichtung (15) die Steckerteile (26, 27) der Steckverbindung (25) automatisch verbunden sind, **dadurch gekennzeichnet, dass** zumindest stromführende Kontakte (31) des zumindest einen mit der Stromquelle (2) verbundenen Steckerteils (26) bei Trennung der zumindest zwei Steckerteile (26, 27) der Steckverbindung (25) deaktiviert sind, indem zumindest die stromführenden Kontakte (31) des zumindest einen mit der Stromquelle (2) verbundenen Steckerteils (26) mit jeweils zwei übereinander angeordneten und in Serie geschalteten Schaltern (32) verbunden sind, und ein Schalter (32) der in Serie geschalteten Schalter (32) durch zumindest ein am zumindest einen an der Oberseite des Gehäuses (23) der Kühleinrichtung (15) angeordneten Steckerteil (27) angeordnetes Betätigungselement (34) bei Verbindung der Steckerteile (26, 27) der Steckverbindung (25) betätigbar ist, welche Betätigung des einen Schalters (32) an den darüber angeordneten Schalter (32) weiterleitbar ist.

2. Schweißgerät (1) nach Anspruch 1, **dadurch gekennzeichnet, dass** der zumindest eine mit der Stromquelle (2) verbundene Steckerteil (26) an der Unterseite des Gehäuses (11) der Stromquelle (2) und der zumindest eine mit der Kühleinrichtung (15) verbundene Steckerteil (27) der Steckverbindung (25) an der Oberseite des Gehäuses (23) der Kühleinrichtung (15) angeordnet ist, sodass bei Anordnung der Stromquelle (2) auf der Kühleinrichtung (15) die Steckerteile (26, 27) der Steckverbindung (25) automatisch verbunden sind.

3. Schweißgerät (1) nach Anspruch 1, **dadurch gekennzeichnet, dass** der zumindest eine mit der Stromquelle (2) verbundene Steckerteil (26) an der Unterseite eines zwischen der Stromquelle (2) und der Kühleinrichtung (15) anordenbaren Zwischenmoduls (30) und der zumindest eine mit der Kühleinrichtung (15) verbundene Steckerteil (27) der Steckverbindung (25) an der Oberseite des Gehäuses (23) der Kühleinrichtung (15) angeordnet ist, sodass bei Anordnung des Zwischenmoduls (30) auf der Kühleinrichtung (15) die Steckerteile (26, 27) der Steckverbindung (25) automatisch verbunden sind.

4. Schweißgerät (1) nach einem der Ansprüche 1 bis 3, **dadurch gekennzeichnet, dass** zumindest eine Vorrichtung zur Zentrierung der Steckerteile (26, 27) der Steckverbindung (25) vorgesehen ist.

5. Schweißgerät (1) nach Anspruch 4, **dadurch gekennzeichnet, dass** die Zentriervorrichtung durch ein um den zumindest einen Steckerteil (26) angeordnetes Rahmenelement (35) mit schrägen Innenflächen (36) und ein um den zumindest einen weiteren Steckerteil (27) angeordnetes weiteres Rahmenelement (37) mit zu den schrägen Innenflächen (36) korresepondierend ausgebildeten schrägen Außenflächen (38) gebildet ist.

6. Schweißgerät (1) nach Anspruch 5, **dadurch gekennzeichnet, dass** die Rahmenelemente (35, 37) von den durch sie umgebenden Steckerteilen (26, 27) getrennt angeordnet sind.

7. Schweißgerät (1) nach Anspruch 5, **dadurch gekennzeichnet, dass** die Rahmenelemente (35, 37) mit den durch sie umgebenden Steckerteilen (26, 27) einstückig gebildet sind.

8. Schweißgerät (1) nach einem der Ansprüche 1 bis 7, **dadurch gekennzeichnet, dass** zumindest an dem mit der Stromquelle (2) verbundenen zumindest einen Steckerteil (26) ein Deckel (39) angeordnet ist.

9. Schweißgerät (1) nach Anspruch 8, **dadurch gekennzeichnet, dass** der Deckel vorzugsweise automatisch bei Verbindung der Steckerteile (26, 27) der Steckverbindung (25) vom zumindest einen Steckerteil (26) wegbewegbar ist.

10. Schweißgerät (1) nach einem der Ansprüche 1 bis 9, **dadurch gekennzeichnet, dass** die Steckerteile (26, 27) außermittig an der Unterseite des Gehäuses (11) der Stromquelle (2) oder der Unterseite des Zwischenmoduls (30) und der Oberseite des Gehäuses (23) der Kühleinrichtung (15) angeordnet sind.

11. Schweißgerät (1) nach einem der Ansprüche 1 bis 10, **dadurch gekennzeichnet, dass** an der Unterseite des Gehäuses (11) der Stromquelle (2) und bzw. oder an der Unterseite des Zwischenmoduls (30) Verbindungselemente und an der Oberseite des Gehäuses (23) der Kühleinrichtung (15) und allenfalls an der Oberseite des Zwischenmoduls (30) entsprechende Aufnahmeelemente zur Aufnahme der Verbindungselemente vorgesehen sind.

12. Schweißgerät (1) nach einem der Ansprüche 1 bis 11, **dadurch gekennzeichnet, dass** Verriegelungselemente zur Verriegelung der Verbindung der Stromquelle (2) mit der Kühleinrichtung (15) und allenfalls dem Zwischenmodul (30), beispielsweise Verbindungsbolzen, Schrauben oder dgl., vorgesehen sind.

13. Schweißgerät (1) nach einem der Ansprüche 1 bis 12, **dadurch gekennzeichnet, dass** der zumindest eine mit der Stromquelle (2) verbundene Steckerteil (26) durch eine Buchse mit zurückversetzten Kontakten (28) und der zumindest eine mit der Kühleinrichtung (15) verbundene Steckerteil (27) durch einen zur Buchse passenden Stecker gebildet ist.

## Claims

1. A welding device (1) having a power source (2) arranged in a housing (11) and a cooling device (15) arranged in a housing (23) for cooling a welding torch (7), wherein an electrical connection (24) is provided between the power source (2) and the cooling device (15), and the electrical connection (24) between the power source (2) and the cooling device (15) is formed by a plugging connection (25) having at least two plugging parts (26, 27) that include corresponding contacts (28, 29), wherein at least one plugging part (26) of the plugging connection (25) is connected to the power source (2) and at least one plugging part (27) of the plugging connection is connected to the cooling device (15), so when the power source (2) is arranged on the cooling device (15), the plugging parts (26, 27) of the plugging connection (25) are connected automatically, **characterised in that** at least live contacts (31) of the at least one plugging part (26) connected to the power source (2) are deactivated when disconnecting the at least two plugging parts (26, 27) of the plugging connection (25) by connecting at least each of the live contacts (31) of the at least one plugging part (26) connected to the power source (2) to two switches (32) arranged on top of one another and being connected in series, and one switch (32) of the switches (32) connected in series is operable when connecting the plugging parts (26, 27) of the plugging connection (25) by at least one actuating element (34) arranged on the at least one plugging part (27) that is arranged on the top of the housing (23) of the cooling device (15), which actuation of the switch (32) may be relayed to the switch (32) arranged on top thereof.

2. The welding device (1) according to claim 1, **characterised in that** the at least one plugging part (26) connected to the power source (2) is arranged on the bottom of the housing (11) of the power source (2), and the at least one plugging part (27) of the plugging connection (25) connected to the cooling device (15) is arranged on the top of the housing (23) of the cooling device (15), so when the power source (2) is arranged on the cooling device (15), the plugging parts (26, 27) of the plugging connection (25) are connected automatically.

3. The welding device (1) according to claim 1, **characterised in that** the at least one plugging part (26) connected to the power source (2) is arranged on the bottom of an intermediate module (30) arrangeable between the power source (2) and the cooling device (15), and the at least one plugging part (27) of the plugging connection (25) connected to the cooling device (15) is arranged on the top of the housing (23) of the cooling device (15), so when the intermediate module (30) is arranged on the cooling device (15), the plugging parts (26, 27) of the plugging connection (25) are connected automatically.

4. The welding device (1) according to any one of claims 1 to 3, **characterised in that** at least one device for centring the plugging parts (26, 27) of the plugging connection (25) is provided.

5. The welding device (1) according to claim 4, **characterised in that** the centring device is formed by an frame element (35) having oblique inner surfaces (36) that is arranged around the at least one plugging part (26) and a further frame element (37) having oblique outer surfaces (38) formed corresponding to the oblique inner surfaces (36) that is arranged around the at least one further plugging part (27).

6. The welding device (1) according to claim 5, **characterised in that** the frame elements (35, 37) are arranged separately from the plugging parts (26, 27) surrounded by them.

7. The welding device (1) according to claim 5, **characterised in that** the frame elements (35, 37) are formed integrally with the plugging parts (26, 27) surrounded by them.

8. The welding device (1) according to any one of claims 1 to 7, **characterised in that** a lid (39) is arranged at least on the at least one plugging part (26) connected to the power source (2).

9. The welding device (1) according to claim 8, **characterised in that** when connecting the plugging parts (26, 27) of the plugging connection (25), the lid may preferably be moved away from the at least one plugging part (26) automatically.

10. The welding device (1) according to any one of claims 1 to 9, **characterised in that** the plugging parts (26, 27) are arranged eccentrically on the bottom of the housing (11) of the power source (2) or the bottom of the intermediate module (30) and the top of the housing (23) of the cooling device (15).

11. The welding device (1) according to any one of claims 1 to 10, **characterised in that** connecting elements are provided on the bottom of the housing (11) of the power source (2) and/or on the bottom of the intermediate module (30), and corresponding receiving elements for receiving the connecting elements are provided on the top of the housing (23) of the cooling device (15) and, if need be, on the top of the intermediate module (30).

12. The welding device (1) according to any one of claims 1 to 11, **characterised in that** locking elements for locking the connection of the power source (2) to the cooling device (15) and, if need be, the intermediate module (30) are provided, for example connecting bolts, screws or the like.

13. The welding device (1) according to any one of claims 1 to 12, **characterised in that** the at least one plugging part (26) connected to the power source (2) is formed by a jack having recessed contacts (28), and the at least one plugging part (27) connected to the cooling device (15) is formed by a plug matching the jack.

## Revendications

1. Poste de soudure (1) ayant une source de courant (2) agencée dans un logement (11) et un dispositif de refroidissement (15) installé dans un logement (23) destiné à refroidir une torche de soudage (7), un raccordement électrique (24) étant prévu entre la source de courant (2) et le dispositif de refroidissement (15) et le raccordement électrique (24) entre la source de courant (2) et le dispositif de refroidissement (15) étant constitué par un raccord enfichable (25) ayant au moins deux parties de fiche (26, 27) avec des contacts correspondants (28, 29), au moins une partie de fiche (26) du raccord enfichable (25) étant reliée à la source de courant (2) et au moins une partie de fiche (27) du raccord enfichable (25) étant reliée au dispositif de refroidissement (15), de telle sorte que lorsque la source de courant (2) est montée sur le dispositif de refroidissement (15), les parties de fiche (26, 27) du raccord enfichable (25) sont automatiquement reliées, **caractérisé en ce qu'**au moins des contacts conducteurs du courant (31) de l'au moins une partie de fiche (26) reliée à la source de courant (2) sont désactivés lorsque les au moins deux parties de fiche (26, 27) du raccord enfichable (25) sont séparées **en ce qu'**au moins les contacts conducteurs du courant (31) de l'au moins une partie de fiche (26) reliée à la source de courant (2) sont reliés respectivement avec deux commutateurs (32) agencés l'un au-dessus de l'autre et montés en série et un commutateur (32) des commutateurs (32) montés en série peut être actionné au moyen d'au moins un élément d'actionnement (34) agencé sur au moins une partie de fiche (27) agencée sur le côté supérieur du logement (23) du dispositif de refroidissement (15) lorsque les parties de fiche (26, 27) du raccord enfichable (25) sont reliées, lequel actionnement d'un commutateur (32) peut être transmis au commutateur (32) agencé par-dessus.

2. Poste de soudure (1) selon la revendication 1, **caractérisé en ce que** l'au moins une partie de fiche (26) reliée à la source de courant (2) est agencée sur le côté inférieur du logement (11) de la source de courant (2) et l'au moins une partie de fiche (27) du raccord enfichable (25) reliée au dispositif de refroidissement (15) est agencée sur le côté supérieur du logement (23) du dispositif de refroidissement (15), de telle sorte que lorsque la source de courant (2) est montée sur le dispositif de refroidissement (15), les parties de fiche (26, 27) du raccord enfichable (25) sont automatiquement reliées.

3. Poste de soudure (1) selon la revendication 1, **caractérisé en ce que** l'au moins une partie de fiche (26) reliée à la source de courant (2) est agencée sur le côté inférieur d'un module intermédiaire (30) pouvant être agencé entre la source de courant (2) et le dispositif de refroidissement (15) et l'au moins une partie de fiche (27) du raccord enfichable (25) reliée au dispositif de refroidissement (15) est agencée sur le côté supérieur du logement (23) du dispositif de refroidissement (15), de telle sorte que lorsque le module intermédiaire (30) est monté sur le dispositif de refroidissement (15), les parties de fiche (26, 27) du raccord enfichable (25) sont automatiquement reliées.

4. Poste de soudure (1) selon l'une des revendications 1 à 3, **caractérisé en ce qu'**il est prévu au moins un dispositif pour centrer les parties de fiche (26, 27) du raccord enfichable (25).

5. Poste de soudure (1) selon la revendication 4, **caractérisé en ce que** le dispositif de centrage est constitué par un élément de châssis (35) agencé autour de l'au moins une partie de fiche (26) ayant des surfaces intérieures obliques (36) et un autre élément de châssis (37) agencé autour de l'au moins une autre partie de fiche (27) ayant des surfaces extérieures obliques (38) réalisées de façon à correspondre aux surfaces intérieures obliques (36).

6. Poste de soudure (1) selon la revendication 5, **caractérisé en ce que** les éléments de châssis (35, 37) sont agencés de façon séparée des parties de fiche (26, 27) qu'ils entourent.

7. Poste de soudure (1) selon la revendication 5, **caractérisé en ce que** les éléments de châssis (35, 37) sont réalisés d'une seule pièce avec les parties de fiche (26, 27) qu'ils entourent.

8. Poste de soudure (1) selon l'une des revendications 1 à 7, **caractérisé en ce qu'**une protection (39) est agencé sur l'au moins une partie de fiche (26) reliée à la source de courant (2).

9. Poste de soudure (1) selon la revendication 8, **caractérisé en ce que** la protection peut de préférence être écartée automatiquement de l'au moins une partie de fiche (26) lorsque les parties de fiche (26, 27) du raccord enfichable (25) sont reliées.

10. Poste de soudure (1) selon l'une des revendications 1 à 9, **caractérisé en ce que** les parties de fiche (26, 27) sont agencées de façon excentrée sur le côté inférieur du logement (11) de la source de courant (2) ou le côté inférieur du module intermédiaire (30) et le côté supérieur du logement (23) du dispositif de refroidissement (15).

11. Poste de soudure (1) selon l'une des revendications 1 à 10, **caractérisé en ce qu'**il est prévu, sur le côté inférieur du logement (11) de la source de courant (2) et/ou sur le côté inférieur du module intermédiaire (30), des éléments de raccordement et, sur le côté supérieur du logement (23) du dispositif de refroidissement (15) et le cas échéant sur le côté supérieur du module intermédiaire (30), des éléments de réception correspondants destinés à recevoir les éléments de raccordement.

12. Poste de soudure (1) selon l'une des revendications 1 à 11, **caractérisé en ce qu'**il est prévu des éléments de verrouillage pour verrouiller le raccordement de la source de courant (2) avec le dispositif de refroidissement (15) et le cas échéant le module intermédiaire (30), par exemple des boulons de raccordement, des vis ou des éléments similaires.

13. Poste de soudure (1) selon l'une des revendications 1 à 12, **caractérisé en ce que** l'au moins une partie de fiche (26) reliée à la source de courant (2) est constituée par une douille ayant des contacts décalés vers l'arrière (28) et l'au moins une partie de fiche (27) reliée au dispositif de refroidissement (15) est constituée par une fiche adaptée à la douille.
